# EUROPÄISCHE PATENTSCHRIFT

(11) **EP 3 325 279 B1**
(45) Veröffentlichungstag und Bekanntmachung des Hinweises auf die Patenterteilung: **09.09.2020**
(21) Anmeldenummer: 16741535.5
(22) Anmeldetag: 11.07.2016
(51) Int. Cl.: B42D 25/36, B42D 25/324, B42D 25/328, B42D 25/346, B42D 25/373, B42D 25/435, B42D 25/445, B42D 25/342, B41M 3/14, G02B 5/30

(54) **SICHERHEITSELEMENT UND VERFAHREN ZU DESSEN HERSTELLUNG**
SECURITY ELEMENT AND METHOD FOR PRODUCTION THEREOF
ÉLÉMENT DE SÉCURITÉ ET SON PROCÉDÉ DE PRODUCTION

(30) Priorität: 23.07.2015 DE 102015009584
(43) Veröffentlichungstag der Anmeldung: 30.05.2018
(73) Patentinhaber: Giesecke+Devrient Currency Technology GmbH, 81677 München (DE)
(72) Erfinder: LOCHBIHLER, Hans, 80337 München (DE); LICHTENEGGER, Friederike, 82049 Pullach im Isartal (DE); THIERAUF, Klaus, 81825 München (DE)
(86) Internationale Anmeldenummer: PCT/EP2016/001191
(87) Internationale Veröffentlichungsnummer: WO 2017/012699

(56) Entgegenhaltungen:
- WO-A1-2014/023415
- DE-A1-102008 028 187

## Beschreibung

Die Erfindung betrifft ein Sicherheitselement zur Herstellung von Wertdokumenten, wie Banknoten, Schecks oder dergleichen, das eine mit dem bloßen Auge nicht erkennbare Gitterstruktur aufweist, die durch eine Metallschicht gebildet ist.

Die Erfindung betrifft weiter ein Verfahren zur Herstellung eines Sicherheitselementes zur Herstellung von Wertdokumenten, wie Banknoten, Schecks oder dergleichen, wobei auf einem für THz-Strahlung transparenten Träger eine Metallschicht angeordnet und in dieser eine mit dem bloßen Auge nicht ohne Weiteres erkennbare Gitterstruktur ausgebildet wird.

Die Erfindung betrifft schließlich weiter ein Wertdokument mit einem Sicherheitselement zur Herstellung von Wertdokumenten, wie Banknoten, Schecks oder dergleichen, das eine mit dem bloßen Auge nicht erkennbare Gitterstruktur aufweist, die durch eine Metallschicht gebildet ist.

Zur Sicherung von Wertdokumenten, wie Banknoten, Schecks oder dergleichen, gegen Fälschung werden Sicherheitselemente verwendet. Hierbei sind grundsätzlich zwei Arten von Sicherheitselementen zu unterscheiden, verdeckte Sicherheitselemente, die für einen Benutzer des Wertdokumentes nicht ohne Weiteres zu erkennen sind und in der Regel einer maschinellen Echtheitsprüfung unterzogen werden, und offene Sicherheitselemente, die für einen Benutzer erkennbar sind. Ein Beispiel für offene Sicherheitselemente sind beispielsweise Hologramme. Es ist aber auch bekannt, ein Sicherheitsmerkmal so auszubilden, dass es sowohl ein offenes Sicherheitsmerkmal, also ein von einem Benutzer erkennbares Sicherheitsmerkmal, als auch ein verdecktes Sicherheitsmerkmal, das mit dem unbewaffneten Auge in der Regel nur mit einer Maschine überprüfbar ist und einem Benutzer eventuell gar nicht auffällt, aufweist. Neben Hologrammen sind beispielsweise offene Sicherheitsmerkmale auf Basis metallisierter Sägezahnstrukturen oder Color-Shift-Beschriftungen oder Prägestrukturen, die mit einer dünnen Metallschicht überzogen sind, bekannt.

Ein Ansatz für die maschinelle Überprüfung von Sicherheitselementen ist es, metallische Sicherheitselemente in einem bestimmten elektromagnetischen Spektralbereich zu untersuchen. Hier bietet sich für verdeckte Sicherheitsmerkmale der THz-Spektralbereich an, in dem Banknotensubstrate, wie Papier oder Polymer, transparent sowie dort metallisierte Bereiche opak erscheinen. Der THz-Spektralbereich wird auch Submillimeterwellen-, Ferninfrarot- oder Far-IR-Spektralbereich genannt und erfasst damit den Spektralbereich des elektromagnetischen Spektrums zwischen der Infrarotstrahlung und den Mikrowellen. Bei einer Wellenlänge von unter 1 mm und über 100 µπι liegt der Frequenzbereich entsprechend bei 0,3 THz bis 5 THz. THz-Strahlung liegt im Grenzbereich, den Überlagerungsempfänger fast nicht mehr, aber optische Sensoren noch nicht abdecken können. Seine Ausnutzung ist im Stand der Technik beispielsweise aus der WO 2004/081545 A1 sowie der EP 1792283 B1 bekannt, die beide Sicherheitselemente offenbaren, welche mit THz-Strahlung ausgewertet werden.

Die WO 2004/081545 A1 offenbart eine metallische Relief -Struktur, die eine Wechselwirkung im THz-Bereich zeigt und zur Authentisierung eines Wertdokumentes dient. Die Relief-Struktur besteht aus metallisierten Sägezahngittern oder Multistep-Gittern und liefert eine Bild- bzw. Motivinformation im Reflexionsbetrieb. Die Strukturen haben den Nachteil, dass die Prägetiefe zwischen 40 µιη und 100 µπι liegt. Für viele Wertdokumente, beispielsweise für Banknoten, sind derart dicke Strukturen jedoch unerwünscht, da sie die Gesamtdicke des Wertdokumentes stark erhöhen, was beispielsweise die Umlauffähigkeit einer Banknote beeinträchtigen würde.

Die EP 1792283 B1 der Anmelderin patentiert Strukturen mit einer zwei- bis sechszähligen Symmetrie, welche eine Wechselwirkung im THz-Bereich zeigt. Leitfähige Strukturelemente sind auf einer Fläche in einem sich periodisch wiederholenden Raster angeordnet. Die metallische Struktur ist dabei mit dem Auge zu erkennen, weshalb zur Tarnung eine Deckschicht vorgesehen ist.

Die WO 2014/206977 A1 beschreibt Metamaterialien für Sicherheitselemente bei Banknoten, die THz-Strahlung nutzen. Es werden Lochstrukturen beschrieben, die einen großen demetallisierten Flächenanteil haben und daher mit dem bloßen Auge klar erkennbar sind.

J. W. Lee et al.,"Terahertz Electromagnetic Wave Transmission through Random Arrays of Single Rectangular Holes and Slits in Thin Metallic Sheets", Physical Review Letters, 99, S. 137401-1 -137401-4, 2007, befassen sich mit den Transmissionseigenschaften von statistisch angeordneten, rechteckigen Löchern und Schlitzmustern für THz-Strahlung. M. Shalaby et al., "Concurrent field enhancement and high transmission of THz radiation in nanoslit arrays", Applied Physics Letters, 99, 041110, 2011, analysieren einen Feldverstärkungsfaktor für THz-Strahlung bei Längsschlitzen in regelmäßiger Anordnung. Das Ziel ist es, einen innerhalb der Längsschlitze wirkenden Feldverstärkungsfaktor gegenüber einem Gesamttransmissionsgrad abzugleichen und eine Gegenläufigkeit der Optimierung möglichst aufzuheben.

Generell müssen Sicherheitselemente für Wertdokumente mehrere Anforderungen erfüllen. Zum einen sollen sie mit einfachen Mitteln schwer oder gar nicht nachzubilden sein, d.h. der Aufwand für eine einmalige Herstellung sollte möglichst hoch liegen. Zum anderen sollte die Herstellung in der Serienproduktion dagegen möglichst wenig Aufwand bereiten.

Ein Sicherheitsmerkmal, das mit THz-Strahlung wechselwirkt, sollte darüber hinaus visuell möglichst nicht wahrgenommen werden können, um einem potentiellen Fälscher kein Indiz für das Vorhandensein des Sicherheitselementes zu geben.

Offene Sicherheitsmerkmale haben den Vorteil, dass eine Überprüfung quasi bei jeder Benutzung durch einen Benutzer stattfindet bzw. stattfinden kann, wohingegen verdeckte, d.h. nur maschinenlesbare Sicherheitselemente in der Regel nur bei bestimmten Ereignissen, beispielsweise wenn eine Banknote während ihres Umlaufs in einer Bank oder Zentralbank eintrifft, überprüft werden. Ein solches offenes Sicherheitsmerkmal mit sichtbaren Aussparungen in einer Metallschicht ist aus der DE 102008028187 A1 bekannt.

Der Erfindung liegt deshalb die Aufgabe zugrunde, ein mit THz-Strahlung erfassbares und somit verdecktes Sicherheitselement zu schaffen, das einerseits besonders einfach herstellbar ist und andererseits mit offenen Sicherheitsmerkmalen besonders vorteilhaft kombiniert werden kann.

Die Erfindung ist in den Ansprüchen 1 und 4 definiert.

Die Aufgabe wird gelöst mit einem Sicherheitselement zur Herstellung von Wertdokumenten, wie Banknoten, Schecks oder dergleichen, das eine mit dem bloßen Auge nicht erkennbare Gitterstruktur aufweist, die durch eine für THz-Strahlung opake Schicht, bevorzugt eine Metallschicht, gebildet ist, wobei die Schicht eine Schichtdicke zwischen 6 nm und 1 µιη aufweist, in der Schicht für THz-Strahlung transparente nebeneinanderliegende Längsschlitze ausgebildet sind, die Schicht in ein für THz- Strahlung transparentes Dielektrikum eingebettet ist, die Längsschlitze nebeneinander periodisch oder quasiperiodisch mit einer Periode zwischen 8 µπι und 200 µιη angeordnet sind, und die Breite der Längsschlitze nicht größer als 1/5, bevorzugt 1/10, der Periode ist, und ferner die Schlitze mindestens 5-mal so lang wie die Periode sind.

Quasiperiodisch bedeutet, dass die Gitterperiode um einen Mittelwert schwankt. Bevorzugt kann diese Schwankung bis zu einer halben Periode, besonders bevorzugt bis zu 1/10 Periode betragen. Mit quasiperiodischer Anordnung sind insbesondere periodische Strukturen abgedeckt, bei denen die Periode fertigungsbedingt schwankt. Auch solche quasiperiodischen Anordnungen von Schlitz-Strukturen weisen eine erhöhte TM-Transmission in THz-Bereich auf.

Die Aufgabe wird weiter gelöst mit einem Verfahren zur Herstellung eines Sicherheitselementes zur Herstellung von Wertdokumenten, wie Banknoten, Schecks oder dergleichen, wobei auf einem für THz-Strahlung transparenten Träger eine für THz-Strahlung opake Schicht, bevorzugt eine Metallschicht, angeordnet und in dieser eine mit dem bloßen Auge nicht erkennbare Gitterstruktur ausgebildet wird, wobei die Schicht eine Schichtdicke zwischen 6 nm und 1 µπι aufweist, in der Schicht für THz-Strahlung transparente Längsschlitze ausgebildet werden, die Längsschlitze periodisch bzw. quasiperiodisch mit einer Periode zwischen 8 µιη und 200 µιη angeordnet werden, die Breite der Längsschlitze nicht größer als 1/5, bevorzugt 1/10, der Periode ist, die Schlitze mindestens 5-mal so lang wie die Periode sind und die Schicht mit einem für THz-Strahlung transparenten Dielektrikum abgedeckt wird.

Die Aufgabe wird schließlich ebenfalls gelöst mit einem Wertdokument mit einem erfindungsgemäßen Sicherheitselement.

Das erfindungsgemäße Sicherheitselement ist im THz-Bereich überprüfbar, da die Schlitz-Struktur für THz-Strahlung mit TM-Polarisation transparent, für TE-Polarisation hingegen opak ist oder umgekehrt. Das Sicherheitsmerkmal wirkt auf Grund der Schlitz-Struktur als Polarisator, der THz-Strahlung mit einer Polarisation durchlässt. Ist die einfallende THz- Strahlung entsprechend polarisiert, tritt ein großer Anteil dieser Polarisationskomponente durch das Sicherheitselement hindurch. Das Sicherheitselement lässt sich somit sehr einfach einer maschinellen Echtheitsüberprüfung unterziehen. Dazu wird eine THz-Strahlungsquelle und ein THz-Detektor verwendet. Idealerweise ist die THz-Strahlung polarisiert, wobei das Sicherheitselement auch mit unpolarisierter THz-Strahlung erkannt werden kann. In diesem Fall ist dann zwingend vor dem Detektor ein Polarisator angeordnet, der als Analysator wirkt. Die Echtheitsüberprüfung lässt sich sowohl mit einer Messung in Transmission als auch in Reflexion durchführen. Im beispielhaften Fall der Transmission wirkt das Sicherheitselement als Polarisator, der die THz-Strahlung mit TM-Polarisation durchlässt. Ist die THz-Strahlung entsprechend linear polarisiert, so tritt diese Komponente zum Großteil durch das Sicherheitselement hindurch und wird bei gleicher Polarisation des Analysators vollständig detektiert. Stehen die Polarisationsrichtungen von Strahlungsquelle und Detektor senkrecht aufeinander, so kann der triviale Fall eines Loches im Sicherheitselement ausgeschlossen werden. Dieser wäre auch optisch überprüfbar. Bei einer verdrehten Anordnung des Sicherheitsmerkmals wird eine senkrecht polarisierte THz-Strahlung beim Hindurchtreten durch das Sicherheitselement gedreht und der Analysator mit waagerechter Polarisierung kann das THz-Signal empfangen. Durch die Aufnahme bei zwei oder mehreren unterschiedlichen Polarisationsrichtungen kann der Kontrast verstärkt werden. Die maschinelle Echtheitsüberprüfung kann damit sowohl bei paralleler Orientierung der Polarisation von Strahlquelle und Detektor als auch bei gekreuzter Orientierung ausgeführt werden. Die Verdrehung des Sicherheitsmerkmals ist eine Rotation des Sicherheitsmerkmals in der Ebene, die von den periodisch bzw. quasiperiodisch nebeneinanderliegenden Längsschlitzen definiert wird.

Die Schlitz-Struktur ist mit dem bloßen Auge zumindest für einen ungeübten Betrachter und/ oder in bloßer Draufsicht nicht erkennbar, da die Breite der Längsschlitze nicht größer als 1/ 5 der Periode ist. Senkt man diese Obergrenze, wird die Schlitz-Struktur auch für einen geübten Beobachter, der nach der Schlitz-Struktur sucht und/ oder bei der Anwendung besonderer Betrachtungstechniken (beispielsweise bestimmtes Kippen und Drehen des Sicherheitselementes), nur sehr schwer oder gar nicht mehr erkennbar. Es ist besonders bevorzugt, dass die Breite der Längsschlitze nicht größer ist als 1/10 der Periode, da dann die Schlitz-Struktur ein besonders gut verdecktes Sicherheitsmerkmal erzeugt.

In einer Weiterbildung ist das Sicherheitselement so ausgebildet, dass die Schicht aus mehreren Feldern aufgebaut ist, in der sich die Längsrichtungen der Längsschlitze unterscheiden. Die Richtungen der Längsschlitze der Felder haben also unterschiedliche Winkelorientierungen zueinander. Solche einzelnen Felder erscheinen in Abhängigkeit von der Orientierung zum THz= Detektor dann unterschiedlich hell.

Die erfindungsgemäße Ausgestaltung der Gitterstruktur in der Schicht ist für das bloße Auge so gut wie nicht wahrnehmbar. Somit erhält ein potentieller Fälscher kein Indiz für das Vorhandensein eines solchen Sicherheitsmerkmals. Die Schicht unterscheidet sich in Reflexion und Transmission so gut wie nicht von einer Schicht, die ohne die Längsschlitze ausgebildet ist. Insbesondere ist es möglich, das Sicherheitselement mit einer visuell transparenten Struktur zu überlagern, und eine verdeckende Abdeckung, wie sie in der EP 1792283 B1 vorgesehen ist, ist nicht nötig.

Bevorzugt ist die für THz-Strahlung opake Schicht eine Metallschicht.

Die zwischen den Längsschlitzen liegenden Bereiche der Schicht sind zusätzlich mit einem weiteren Sicherheitsmerkmal versehen, das mit dem bloßen Auge wahrnehmbar ist. Auf diese Weise hat das Sicherheitselement verdeckte Eigenschaften, die mit THz-Strahlung erkennbar sind, und zusätzliche, mit dem bloßen Auge erkennbare, d.h. offene Sicherheitseigenschaften. Das mit dem bloßen Auge wahrnehmbare weitere Sicherheitsmerkmal kann insbesondere ein metallisiertes Hologramm, ein Subwellenlängengitter mit Perioden von 200 nm bis 500 nm, eine Sägezahnstruktur und/ oder eine Color-Shift-Beschichtung sein.

Das erfindungsgemäße Herstellungsverfahren kann so ausgebildet werden, dass die beschriebenen bevorzugten Ausbildungen und Ausführungsformen des Sicherheitselementes hergestellt werden.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert ist. Es zeigen:
- Fig. 1a und Fig. 1b: eine Darstellung einer ersten Ausführungsform eines Sicherheitselementes, wobei Fig. 1a eine Schnittdarstellung und Fig. 1b eine Draufsicht zeigt,
- Fig. 2a bis 2c: das Transmissionsverhalten einer ersten Ausführungsform des Sicherheitselementes der Fig. 1 für senkrechten Einfallswinkel und polarisierter THz-Strahlung für verschiedene Geometrien und Polarisationseigenschaften,
- Fig. 3a bis 3c und 4a bis 4c: Darstellungen ähnlich der Fig. 2 für andere Geometrien des Sicherheitselementes,
- Fig. 5a bis 5c: das Transmissionsverhalten einer Ausführungsform des Sicherheitselementes der Fig. 1 für verschiedene Einfallswinkel,
- Fig. 6 bis 9: Schnittdarstellungen weiterer Ausführungsformen des Sicherheitselementes, wobei eine opake Schicht jeweils unterschiedlich ausgeführt ist,
- Fig. 10a und 10b: Draufsichten auf das Sicherheitselement der Fig. 9, wobei Fig. 10a die visuelle Erscheinung des Sicherheitselementes zeigt und Fig. 10b eine schematische Darstellung der Strukturgeometrie des Sicherheitselementes ist,
- Fig. 11a bis 11c: verschiedene Schritte zur Herstellung eines Sicherheitselementes, bei dem Längsschlitze durch Mikrokavitäten gebildet sind,
- Fig. 12a bis 12c: verschiedene Schritte eines weiteren Herstellverfahrens, hier exemplarisch für die Ausführungsform der Fig. 6,
- Fig. 13 und 14: verschiedene Anordnungen zur Echtheitsüberprüfung des Sicherheitselementes und
- Fig. 15a bis 15c und 16a bis 16c: jeweils verschiedene Schritte eines weiteren Herstellverfahrens.

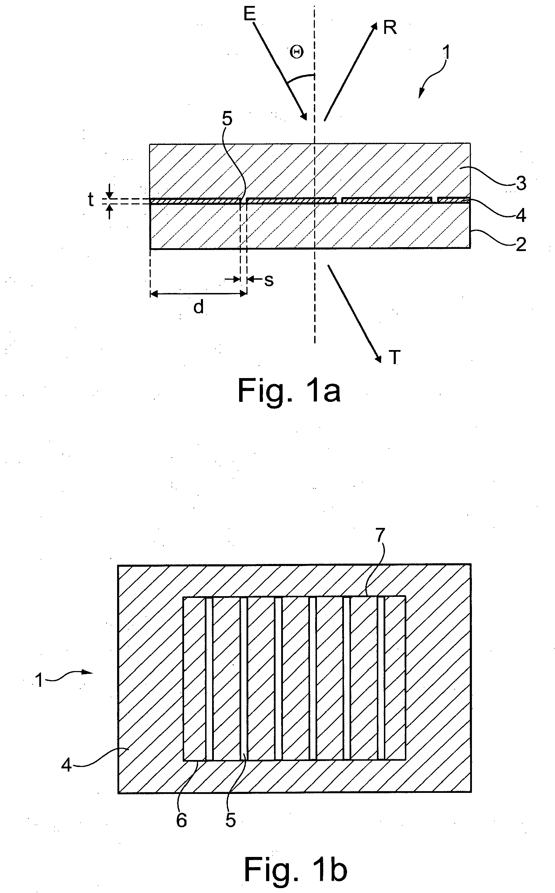

Fig. 1a zeigt eine Schnittdarstellung durch ein Sicherheitselement 1; Fig. 1b zeigt die zugehörige Draufsicht. Entsprechende Elemente sind in den beiden Figuren mit denselben Bezugszeichen versehen. Das Sicherheitselement 1 ist auf einer Trägerfolie 2 aufgebaut und mit einer Deckschicht 3 mit gleichem Brechungsindex abgedeckt. Zwischen der Trägerfolie 2 und der Deckschicht 3 befindet sich eine für THz-Strahlung opake Schicht 4, die beispielsweise als Metallschicht ausgebildet sein kann. Die opake Schicht 4 hat eine Schichtdicke t. In der Schicht 4 sind Längsschlitze 5 einer Schlitzbreite s gebildet, wobei die Längsschlitze 5 nebeneinander periodisch mit einer Periode d angeordnet sind. Eine unter einem Winkel Θ einfallende THz-Strahlung E wird vom Sicherheitselement teilweise als reflektierte THz-Strahlung R zurückgeworfen bzw. als transmittierte THz-Strahlung T auf die andere Seite transmittiert. Zwischen den Längsschlitzen 5 befinden sich opake Zwischenräume 6. Das Sicherheitselement ist in der Ausführungsform gemäß Fig. 1b in einem Feld 7 der opaken Schicht 4 angeordnet. Da, wie nachfolgend noch erläutert werden wird, das Transmissionsverhalten hinsichtlich verschiedener Polarisationsrichtungen von der Längsrichtung der Längsschlitze 5 abhängt, ist es in einer (nicht dargestellten) Weiterbildung vorgesehen, mehrere Felder 7 mit verschiedenen Orientierungen der Richtung der Längsschlitze 5 im Sicherheitselement 1 vorzusehen, beispielsweise nebeneinander.

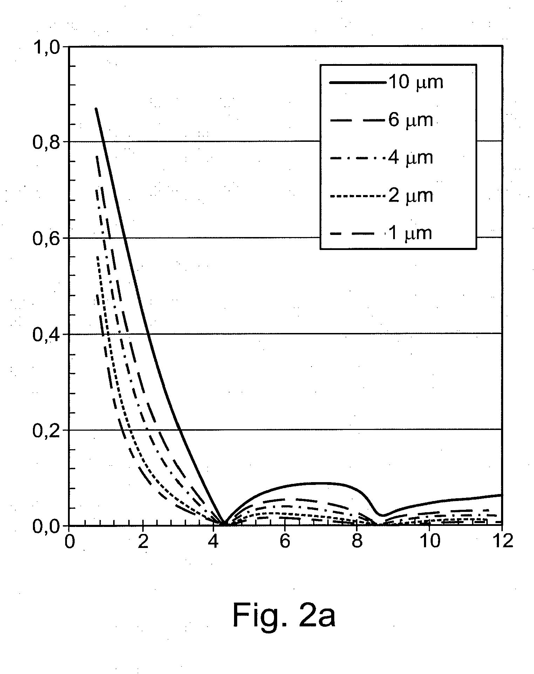

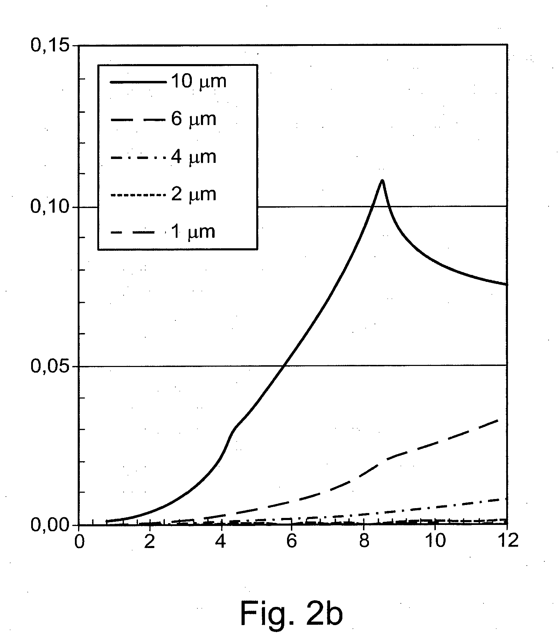

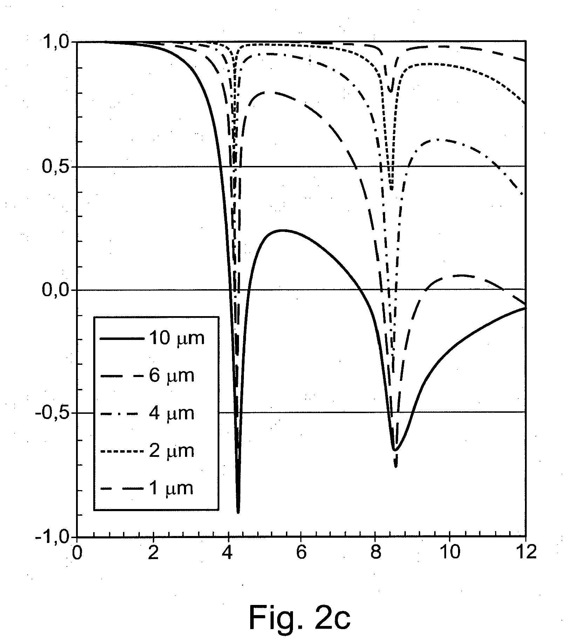

Die Fig. 2a bis 2c zeigen das Transmissionsverhalten des Sicherheitselementes der Fig. 1a und 1b bei einer Realisierung der opaken Schicht 4 in Form einer Metallschicht, im konkreten Beispiel in Form einer Aluminiumschicht. In den Figuren sind dabei mehrere Linien in unterschiedlicher Strichlierung aufgetragen, die sich auf unterschiedliche Schlitzbreiten s beziehen, wie der Legende der Figuren zu entnehmen ist. Aufgetragen ist in allen Fig. 2a bis 2c auf der Querachse die Frequenz in THz. Fig. 2a und 2b zeigen auf der Hochachse den Transmissionsgrad für TM-Polarisation (Fig. 2a) bzw. TE-Polarisation (Fig. 2b). Fig. 2c zeigt auf der Hochachse einen Polarisationsgrad, gegeben durch die Formel (Transmissionsgrad bei TM - Transmissionsgrad bei TE) / (Transmissionsgrad bei TM + Transmissionsgrad bei TE). Je stärker dieser Polarisationsgrad von 0 verschieden ist, desto stärker ist die Polarisationswirkung des Sicherheitselementes für die THz-Strahlung.

Die Periode der Anordnung der Längsschlitze 5 beträgt für das in den Fig. 2a bis 2c gezeigte Sicherheitselement 50 µπι, die Schichtdicke 50 nm. Variiert ist die Schlitzbreite s.

Für die Frequenz 1 THz beträgt die Transmission bei TM-Polarisation bei einer Schlitzbreite von 10 µm etwa 79 %. Bei einer Schlitzbreite von 1 µm etwa 34 %.

Im sichtbaren Bereich kann der Reflexionsgrad bzw. die Transmission und damit die Erkennbarkeit für das unbewaffnete Auge über das Flächenverhältnis zwischen Schlitzbreite s und Breite der Zwischenräume 6 abgeschätzt werden. Im ersten Fall würde also eine Transmission im Sichtbaren von etwa 20 % und im zweiten Fall von über 2 % vorliegen. Im letzteren Fall würde sich dann der Reflexionsgrad um ca. 2 % gegenüber der Reflexion einer glatten metallisierten Fläche ändern. Zusammen mit der geringen Breite der Längsschlitze ist eine solche Struktur mit dem unbewaffneten Auge so gut wie nicht wahrnehmbar. Daraus folgt, dass die in Fig. 2a bis 2c dargestellten Kurven für Schlitzbreiten, die über ein 1/5, bevorzugt über 1/10, der Periode d betragen, für ein Sicherheitselement kaum in Frage kommen, sondern Vergleichsbeispiele darstellen. Auch die Bauweise gemäß den Kurven für 10 µm und 6 µπ ist für das Sicherheitselement geeignet. Wenn beispielsweise ein Hologramm vollflächig mit der entsprechenden Schlitz-Struktur in dieser Schlitzbreite überzogen ist, ergibt sich zwar eine um den Flächenanteil der Schlitze reduzierte Brillanz des Hologramms, ein Betrachter aber wird dies in der Regel nicht wahrnehmen, da er keinen Vergleich zu einer Hologrammstruktur ohne Schlitze hat. Darüber hinaus enthält eine Hologrammstruktur meist Effekte, wie eine Mattstruktur oder Laufeffekte, welche die Erkennbarkeit der Schlitz-Struktur herabsetzen, also auch breitere Längsschlitze quasi gut verstecken.

Bei TE-Polarisation wird die Transmission für Frequenzen < 2 THz stark unterdrückt. Dies ist auch für ein Gitter mit s = 10 µπι der Fall. Für höhere Frequenzen tritt eine Transmission im einstelligen Prozentbereich auf. Nur das Gitter mit s = 10 µm zeigt ein Maximum von ca. 11% bei einer Frequenz von 8,5 THz.

Der Kontrast der Transmission zwischen TM- und TE-Polarisation ist in Fig. 2c dargestellt. Hier ist jeweils gemäß obigem Zusammenhang der berechnete Polarisationsgrad als Funktion der THz-Frequenz aufgetragen. Je stärker diese Werte von Null verschieden sind, umso stärker ist die Polarisationswirkung des Gitters. Es zeigt sich, dass diese Gitter für Frequenzen < 4 THz ausgeprägte Polarisationseigenschaften aufweisen. Für höhere Frequenzen trifft dies allerdings auch noch für Gitter mit Spaltbreiten s < 2 pm zu (mit Ausnahme in den resonanten Frequenzbereichen bei 4,3 THz bzw. 8,3 THz).

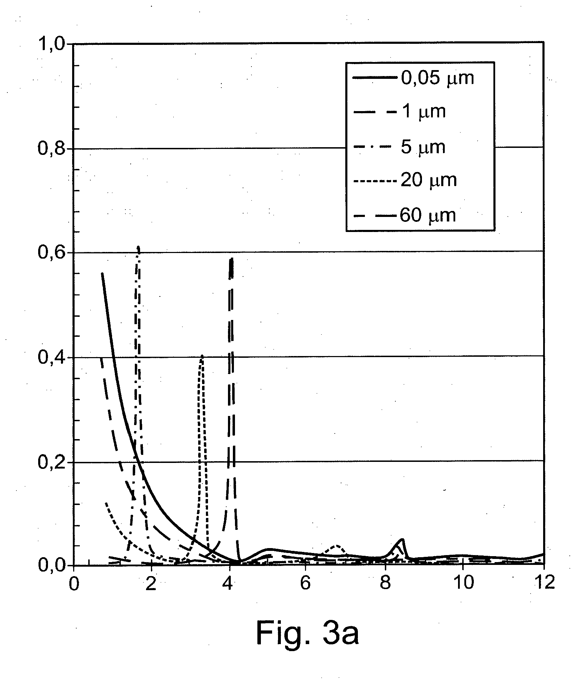

Fig. 3a bis 3c zeigen den Einfluss der Schichtdicke t der opaken Schicht 4, beispielsweise einer Metallschicht. Die Fig. 3a bis 3c zeigen eine Auftragung wie die Fig. 2a bis 2c, jedoch ist hier die Schichtdicke t variiert und die Schlitzbreite s der Längsschlitze 5 beträgt konstant 2 µm. Wie zu erwarten ist, nimmt die Transmission T mit zunehmender Schichtdicke t ab. Die polarisierende Wirkung des Sicherheitselementes 1 verstärkt sich jedoch mit zunehmender Schichtdicke t. Bemerkenswert ist, dass für relativ dicke Schichten, wie z. B. 20 µm oder 60 µm, scharfe Resonanzen in TM-Polarisation auftreten, welche zu einer erhöhten Transmission führen.

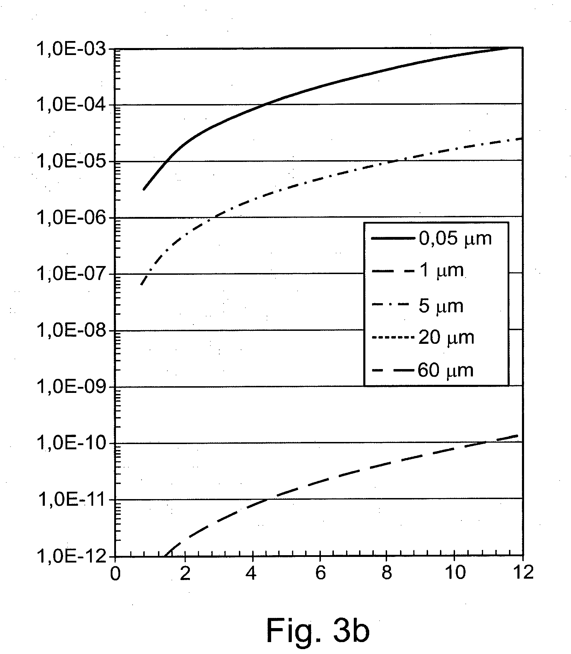

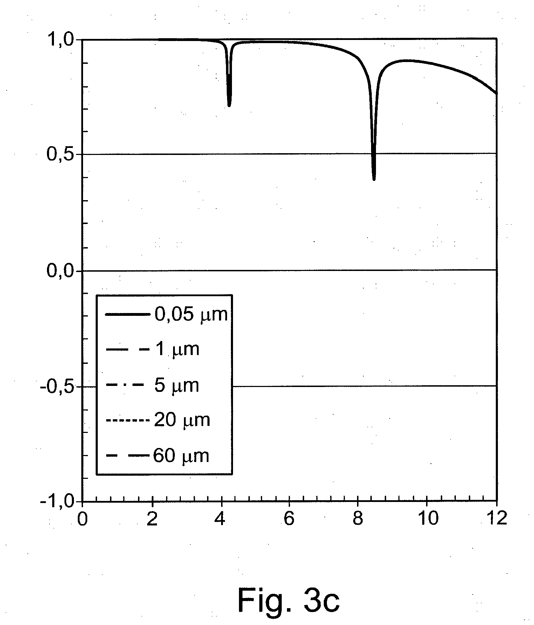

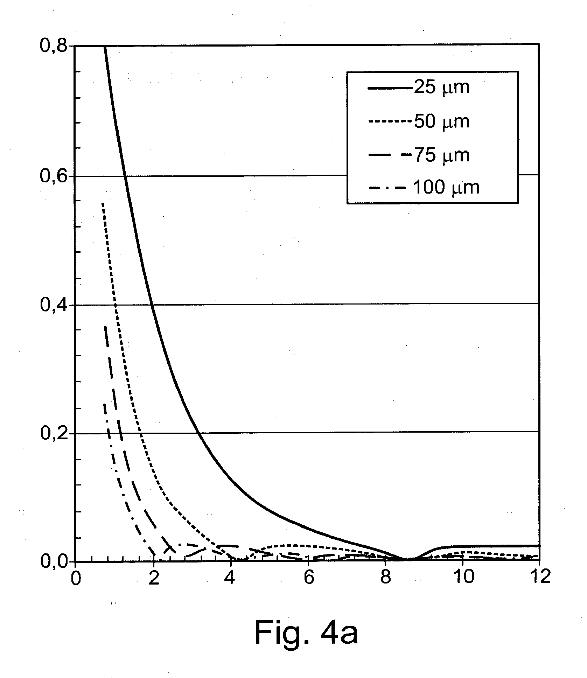

Fig. 4a bis 4c zeigen Auftragungen ähnlich den der Fig. 2 und 3, jedoch ist hier die Periode d variiert. Das Verhältnis von Schlitzbreite s zur Periode d ist dabei konstant und beträgt 4 %.

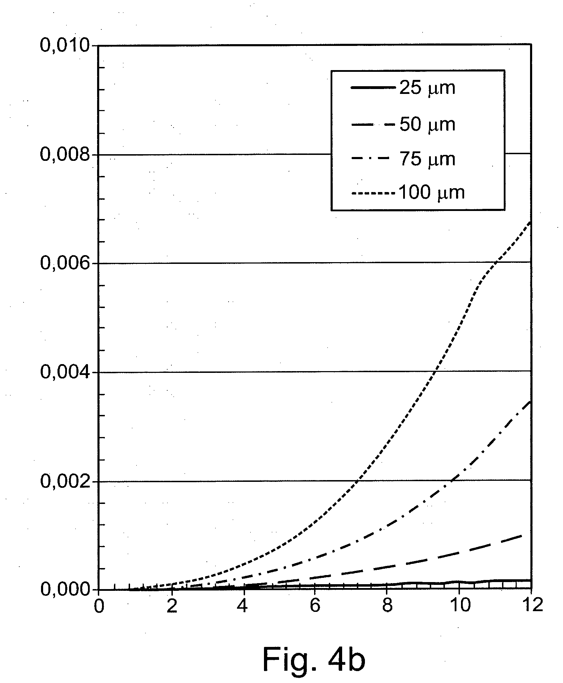

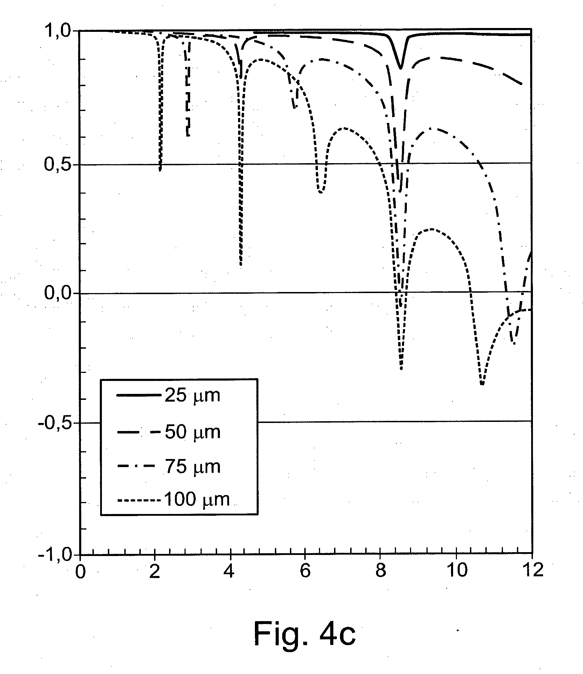

Die Brechzahl der Trägerfolie 2 und der Deckschicht 3 ist identisch und beträgt 1,4. Die Schichtdicke beträgt (wie in Fig. 2) 50 nm. Aus den Fig. 4a und 4b ist ersichtlich, dass die spektrale Charakteristik der Transmission für zunehmende Perioden sich zu niedrigeren Frequenzen hin verschiebt. Fig. 4c zeigt, dass sich die polarisierende Wirkung des Sicherheitselementes 1 für kleinere Perioden verbessert. Daraus folgt, dass die Transmissionscharakteristik durch entsprechende Wahl der Periode d auf ein gewünschtes Frequenzband in THz-Bereich angepasst werden kann, beispielsweise auf eine entsprechende Vorrichtung zur Echtheitsüberprüfung.

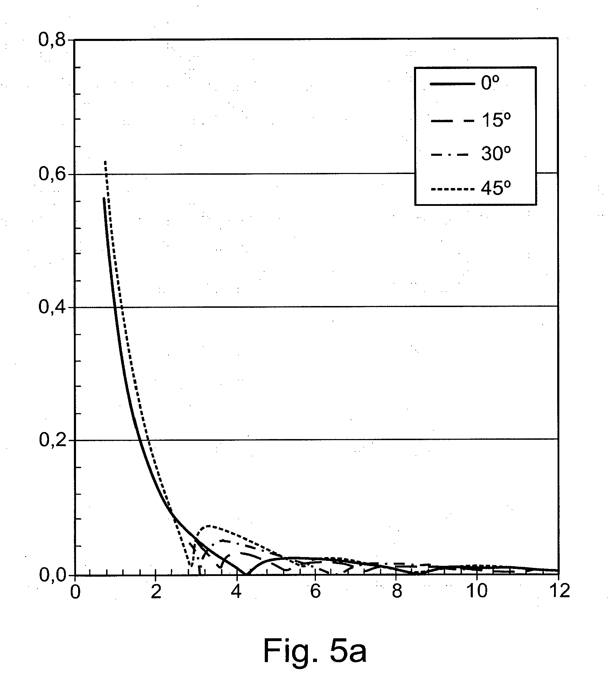

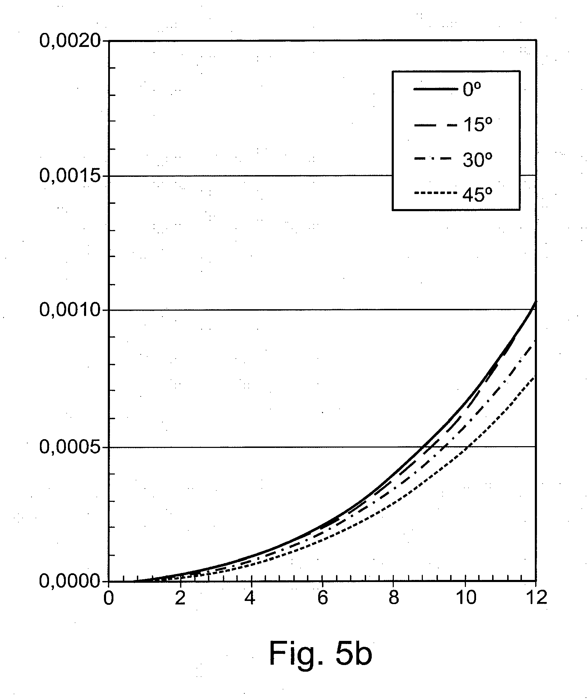

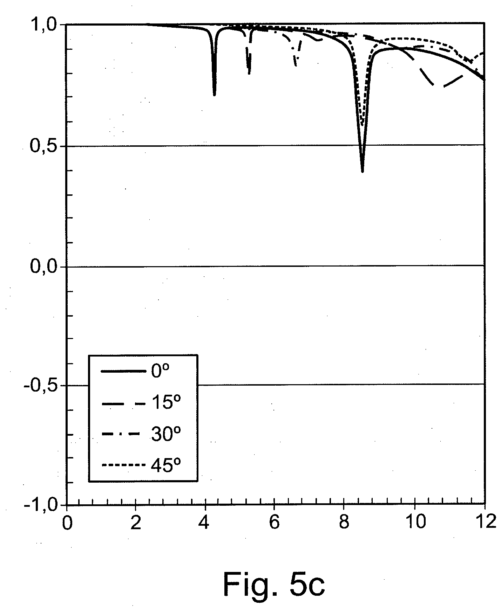

Fig. 5a bis 5c zeigen die Winkelabhängigkeit der Transmission im THz- Bereich. Hier hat das Sicherheitselement 1 eine Periode d von 50 µm, eine Schlitzbreite s von 2 µm und eine Schichtdicke t der opaken Schicht von 50 nm. Die spektrale Transmission ist für verschiedene Einfallswinkel aufgetragen. Es ist ersichtlich, dass sich die Transmission bzw. der Polarisationsgrad nur gering durch ein Verkippen gegenüber senkrechtem Einfallswinkel ändern. Dies macht das Überprüfen des Sicherheitselementes 1 sehr einfach, da nicht penibel auf eine senkrechte Einfallsrichtung, d.h. auf eine präzise Ausrichtung des Sicherheitselementes in einer Echtheitsüberprüfungsvorrichtung geachtet werden muss. Bei einer maschinellen Kontrolle, beispielsweise der Echtheit von Banknoten, liegt stets eine bestimmte Variation im Einfallswinkel zu einer Detektionseinheit vor.

Weiter zeigen Untersuchungen, dass das Sicherheitselement hinsichtlich seiner Transmission- bzw. Polarisationseigenschaften für THz-Strahlung sich kaum verändert, wenn das Profil der opaken Schicht bzw. der Längsschlitze von der in Fig. la dargestellten Rechteckform abweicht. Dies reduziert die Präzisionsanforderung bei der Herstellung des Sicherheitselementes 1 und macht damit die Serienproduktion einfacher, ohne die gewünschten Transmissions- bzw. Polarisationseffekte im THz-Bereich zu beeinträchtigen.

Das Sicherheitselement 1 wird bevorzugt auf einer Trägerfolie 2 hergestellt und kann beispielsweise auf Banknoten aufgebracht werden. Insbesondere dort ist jedoch eine metallisch spiegelnde Fläche für einen Betrachter wenig attraktiv und damit bei der Gestaltung eines Sicherheitselementes mitunter nicht bevorzugt. Eine mögliche Verbesserung bietet eine Überdeckung des Sicherheitselementes. Dabei ist es vorteilhaft, dass herkömmliche Druckfarben sich auf Strahlung im THz-Bereich so gut wie nicht auswirken. Es muss beim Drucken also nicht darauf geachtet werden, nur auf die Zwischenräume 6 zu drucken. Vielmehr kann die opake Schicht 4 sowohl längs der Längsschlitze 5 als auch hinsichtlich der Zwischenräume 6 überdruckt werden.

Besonders bevorzugt ist es, das Sicherheitselement 1 im Bereich der Zwischenräume 6 mit anderen, auf Folienelementen basierenden Sicherheitsmerkmalen zu überlagern. Hierbei kommen bekannte metallische Sicherheitsmerkmale, wie Hologramme, Mikrospiegelanordnungen, Subwellenlängengitter etc. in Frage, wobei Sicherheitsmerkmale bevorzugt sind, die für einen Betrachter mit unbewaffnetem Auge wahrnehmbar sind. Ganz besonders bevorzugt sind Sicherheitsmerkmale, die einerseits von einem Betrachter wahrnehmbar sind, sich hingegen andererseits maschinell auf Echtheit nur schwer überprüfen lassen. Eine solche Kombination mit einem weiteren Sicherheitsmerkmal schafft ein Sicherheitselement, das sowohl für einen Betrachter charakteristisch ist (wegen des weiteren Sicherheitsmerkmals) als auch maschinell einfach (hinsichtlich seiner THz-Eigenschaften) überprüft werden kann (wegen der Schlitz-Struktur).

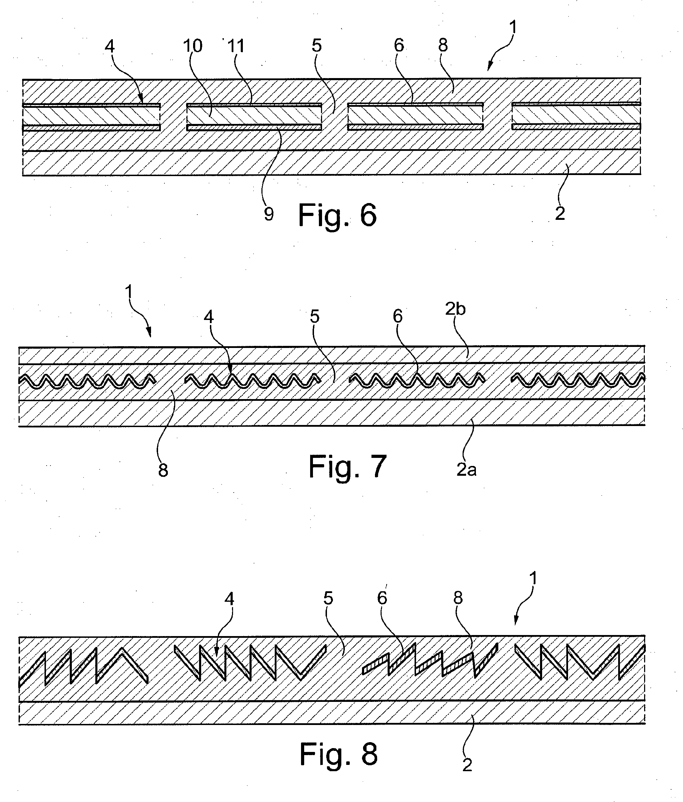

Die Fig. 6 bis 11 zeigen entsprechende Weiterbildungen des Sicherheitselementes 1, bei dem die opake Schicht 4 so ausgebildet ist, dass sie ein für einen Betrachter wahrnehmbares Sicherheitsmerkmal realisiert.

Fig. 6 zeigt eine Schnittdarstellung durch ein Sicherheitselement 1, bei dem die opake Schicht 4 durch einen Mehrschichtaufbau realisiert ist, der einen Color-Shift-Effekt hat. Solche Mehrschichtaufbauten sind bekannt und bestehen beispielsweise aus einer Aluminiumschicht 9 mit darüberliegendem Dielektrikum 10 und einer oberen Chromschicht 11. In eine derartige Ausführungsform der opaken Schicht 4 sind dann die Längsschlitze 5 eingearbeitet, so dass der Color-Shift-Effekt für einen Benutzer wahrnehmbar ist und zugleich eine Überprüfung im THz-Spektralbereich einfach möglich ist. Da der Flächenanteil der Längsschlitze 5 bezüglich der Fläche der opaken Schicht 4 im Prozentbereich liegt, beeinträchtigt der maschinell überprüfbare Teil des Sicherheitselementes 1 den visuellen Eindruck des Sicherheitselementes 1 so gut wie nicht.

In Fig. 6 ist exemplarisch die Einbettung der opaken Schicht 4 in ein Dielektrikum 8 gezeigt, also nicht der zweiteilige Aufbau mit Trägerfolie 2 und Deckschicht 3. Diese Variation ist grundsätzlich für das Sicherheitselement 1 möglich.

Fig. 7 zeigt eine Ausgestaltung des Sicherheitselementes 1, bei dem die opake Schicht 4 als Prägehologramm ausgebildet ist, in das dann die Längsschlitze 5 eingebracht sind. Hier ist in einer weiteren Abwandlung die Trägerfolie 2 zweiteilig in Form einer unteren Trägerfolie 2a und einer oberen Trägerfolie 2b ausgeführt.

Fig. 8 zeigt eine weitere Ausführungsform des Sicherheitselementes 1, bei dem nun die opake Schicht 4 als Sägezahnstruktur ausgeführt ist. Bekannte Sägezahnanordnungen haben eine laterale Ausdehnung zwischen 1 µπι und 10 µπι bei einer Höhe zwischen ca. 0,3 µm und 4 µm. Solche Anordnungen werden benutzt, um Bewegungs- und räumliche Effekte in Reflexion zu erzeugen. Sie sind entweder mit einer einfachen Metallschicht überzogen oder sie sind mit einem sogenannten Color-Shift- Aufbau bedampft. Die metallisierte Struktur ist durch eine periodische Anordnung von schmalen Spalten unterbrochen. Im THz-Bereich wirkt sich nur letztere Über-Struktur auf die Transmission aus, da die Wechselwirkung mit der Sägezahnstruktur selbst gering ist.

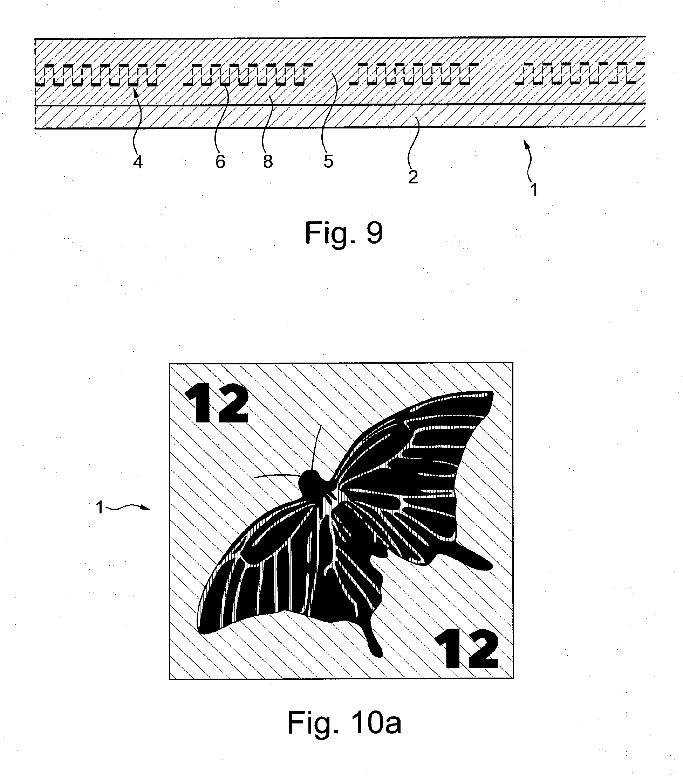

Eine weitere Ausführungsform des Sicherheitselementes 1 zeigt Fig. 9. Hier wird die opake Schicht 4 nun durch ein Subwellenlängengitter ausgebildet, wie es beispielsweise in der DE 102014006527 beschrieben ist. Der Offenbarungsgehalt dieser Schrift wird diesbezüglich vollumfänglich eingebunden. Diese Subwellenlängen-Strukturen sind eindimensionale oder zweidimensionale periodische Gitter mit im Querschnitt im Wesentlichen rechteckigen Strukturen, die metallisch bedampft sind. Die Gitterperiode liegt zwischen 200 nm und 500 nm. Fig. 9 zeigt eine solche Gitterstruktur für die opake Schicht 4. Da die Rechteckstrukturen metallisch bedampft sind, sind solche Subwellenlängen-Strukturen für die THz-Strahlung opak, realisieren also die opake Schicht 4. Die Subwellenlängen-Strukturen sind optisch wahrnehmbar, die Längsschlitze 5 realisieren die mechanische Überprüfbarkeit im THz-Spektralbereich. Durch eine Variation der Geometrie der Subwellenlängen-Strukturen lässt sich in Draufsicht ein Motiv erzeugen, wie die oben genannte Schrift schildert.

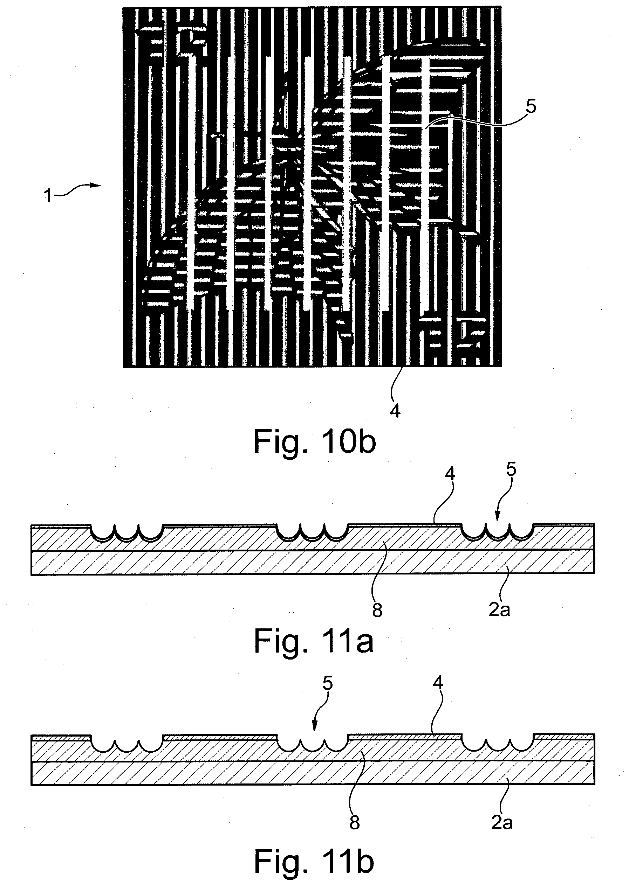

Fig. 10a zeigt die Draufsicht auf eine solche Struktur, die entsprechend lateral so variiert ist, dass sie in Draufsicht einen Schmetterling sowie an zwei Stellen die Zahl 12 sichtbar macht. Fig. 10b zeigt die entsprechende geometrische Anordnung schematisch und hier insbesondere die Längsschlitze 5, welche die maschinelle Überprüfung im THz-Spektralbereich ermöglichen.

Die Herstellung des Sicherheitselementes ist in großen Stückzahlen unproblematisch möglich. Die wesentlichen Schritte sind eine vollflächige Bedampfung der opaken Schicht 4, das Strukturieren der opaken Schicht 4 hinsichtlich der Längsschlitze 5 sowie das Einbinden der opaken Schicht 4 in ein Dielektrikum, beispielsweise das Aufbringen der opaken Schicht 4 auf eine Trägerfolie und das Abdecken mit einer Deckschicht 3.

Die Ausgestaltung des Sicherheitselementes 1 mit einem zusätzlich visuell wahrnehmbaren Sicherheitsmerkmal umfasst vor der Aufbringung der opaken Schicht 4 das Prägen der erforderlichen Struktur auf eine Folie, beispielsweise in einen dort angeordneten Prägelack.

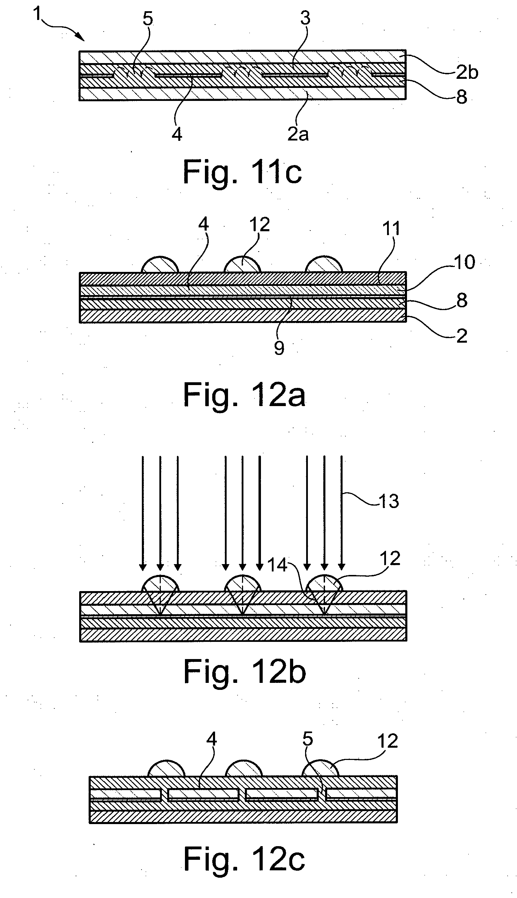

Die Fig. 11a bis 11c zeigen exemplarisch verschiedene Stufen bei der Herstellung einer Ausführungsform des Sicherheitselementes, bei dem die Bereiche der Längsschlitze 5 durch eine Mikrokavitätenstruktur oder Mottenaugenstruktur ausgefüllt sind. Das Metall im Bereich der Mikrokavitäten bzw. der Mottenaugenstruktur wird nun durch Laserbestrahlung abgetragen, die glatten Metallflächen verbleiben auf Grund der wesentlich geringeren Lichtabsorption unverändert (siehe Fig. 11b). Schließlich wird diese Struktur mit einem Dielektrikum abgedeckt und einer Deckfolie kaschiert (siehe Fig. 11c).

Zur Herstellung dieses Sicherheitselementes wird auf der Trägerfolie 2a ein Prägelack aufgebracht und geeignet geprägt. Anschließend wird die opake Schicht 4 vollflächig aufgebracht, die im Bereich der Zwischenräume 6 für verfügbare Laserwellenlängen stark absorbierend ist. Die geprägte Mikrokavitätenstruktur ist exemplarisch als Mottenaugenstruktur ausgebildet. Sie nimmt die Längsschlitze 5 ein. Dort wird die opake Schicht 4 wieder abgetragen, beispielsweise in einem Demetallisierungsschritt durch Laserbestrahlung. Anschließend wird die Deckschicht 3 und die obere Trägerfolie 2b aufgebracht.

Das Entfernen der im THz-Bereich opaken Schicht 4 kann auch mit Hilfe von speziellen Gittern erfolgen, wie sie beispielsweise in der DE 102011115589 A1 beschrieben sind. Diese Publikation wird hier diesbezüglich vollumfänglich einbezogen. Die Bereiche der Längsschlitze 5 werden mit einem resonanten Gitter gefüllt. Die derart erhaltene Oberfläche wird vollflächig mit Metall bedampft. Strahlt man dann Laserstrahlung ein, stellt sich im Bereich des resonanten Gitters eine Resonanz- Absorption ein, welche dort das Metall entfernt. Die übrige Metalloberfläche, d.h. die Bereiche der Zwischenräume 6 bleiben unbeeinträchtigt und unverändert. Auf diese Weise werden die Längsschlitze 5 in der opaken Schicht 4 ausgebildet.

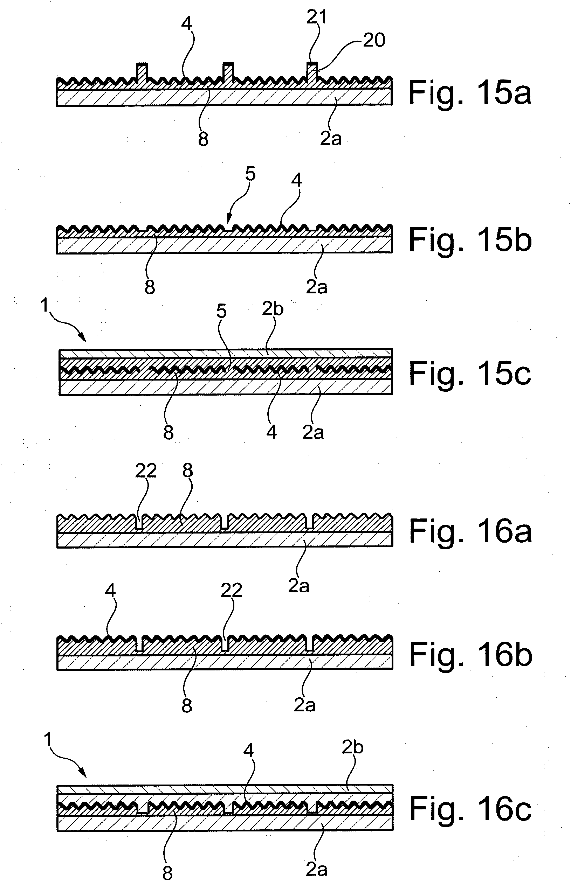

Eine weitere Möglichkeit, die Längsschlitze 5 zu bilden, ist der Einsatz eines Ätzprozesses gemäß Fig. 15a bis 15c. Dazu wird im Dielektrikum 8 eine Prägestruktur mit erhabenen Bereichen 20 an den Stellen erzeugt, an denen später die Längsschlitze 5 zu liegen kommen sollen. Diese erhabenen Bereiche 20 werden mit einem Photoresist 21 bedruckt (Fig. 15a). Anschließend wird die opake Schicht 4, z.B. als Metallfilm senkrecht von oben aufgedampft, und der Photoresist 21 sowie die erhabenen Bereiche 20 werden durch Ätzen entfernt. Dieser Ätzschritt nimmt ebenfalls die opake Schicht 4, z.B. die Metallisierung ab (Fig. 15b) und bildet dadurch die Längsschlitze 5. Anschließend wird ein Dielektrikum aufgebracht und beispielsweise eine Deckschicht oder Trägerfolie 2b aufkaschiert (Fig. 15c).

Eine weitere Möglichkeit, die Längsschlitze 5 herzustellen, ist der Einsatz eines Druckprozesses gemäß Fig. 16a bis 16c. Wiederum wird im Dielektrikum 8 eine Prägestruktur erzeugt, die nun an den Stellen, an denen später die Längsschlitze 5 zu liegen kommen, vertiefte Bereiche 22 aufweist. Nun wird die opake Schicht 4 z.B. als Metallfilm aufgedruckt (Fig. 16b). Auf Grund des Druckverfahrens wird dabei in den vertieften Bereichen 22 keine Schicht (Metallisierung) abgelagert. Anschließend wird wiederum ein Dielektrikum aufgebracht und beispielsweise eine Deckschicht aufkaschiert, so dass die opake Schicht 4 mit den Längsschlitzen 5 wiederum allseitig in Dielektrikum eingebettet ist (Fig. 16c).

Eine weitere Möglichkeit zur Erzeugung der Längsschlitze 5 stellt ein Metalltransferverfahren dar, wie es beispielsweise in der diesbezüglich ebenfalls voll eingebundenen DE 102012018774 A1 beschrieben ist. Dazu wird ebenfalls zunächst eine Prägestruktur mit erhabenen Bereichen an den Stellen erzeugt, an denen später Längsschlitze 5 sein sollen. Die Oberfläche wird jedoch so modifiziert, dass das Metall in diesem Bereich eine niedrigere Haftung hat. Anschließend wird die gesamte Oberfläche der Prägestruktur metallisiert. Im Folgenden wird die Prägestruktur mit einer Transferfolie kontaktiert, wobei auf Grund der Prägestruktur vorwiegend das Metall auf den erhabenen Bereichen in Kontakt mit der Folie kommt und/ oder auf Grund der geringeren Haftung in den erhabenen Bereichen dort entfernt wird, wenn die Transferfolie abgehoben wird.

Ein weiteres Herstellungsverfahren ist in den Fig. 12a bis 12c gezeigt. Die Darstellung zeigt dabei exemplarisch eine Ausgestaltung der Schicht 4 als Mehrschichtstruktur, die im Sichtbaren einen Color-Shift-Effekt hat und im THz-Bereich opak ist. Dies ist jedoch ausschließlich exemplarisch, und das anhand der Fig. 12a bis 12c nachfolgend beschriebene Verfahren lässt sich auch für andersartige Schichten 4 ausführen, solange diese Laserstrahlung absorbieren. Die Schicht 4 wird, wie Fig. 12a zeigt, zuerst vollflächig ausgebildet und über der Schicht 4 werden Mikrolinsen 12 angeordnet, beispielsweise aufgedruckt. Anschließend wird Bearbeitungsstrahlung 13 eingestrahlt. Die Mikrolinsen 12 sind als Zylinderlinsen so ausgebildet, dass die parallel einfallende Bearbeitungsstrahlung 13 in einen linienförmigen Fokus 14 gebündelt wird, der möglichst nahe an der Schicht 4 liegt. Die Bündelung der Bearbeitungsstrahlung 13 entfernt die Schicht 4 im Bereich des Fokus und bildet die Längsschlitze 5 aus. Die Mikrolinsen 12 sind somit entsprechend der Geometrie der Längsschlitze 5 ausgebildet, d.h. sind Zylinderlinsen, die nebeneinander entsprechend der Periode der Längsschlitze 5 angeordnet sind. Die THz-Spektraleigenschaften des Sicherheitselementes 1 werden durch die Mikrolinsen 12, welche sich auf der Oberseite des Sicherheitselementes 1 befinden, nicht beeinträchtigt. Alternativ ist es möglich, die Mikrolinsen 12 zu entfernen.

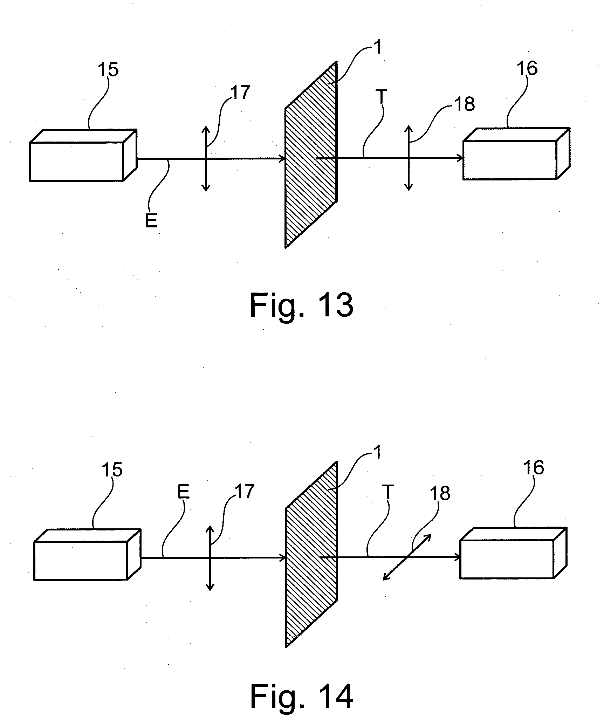

Wie bereits im allgemeinen Teil der Beschreibung erläutert, kann das Sicherheitselement einfach einer Echtheitsüberprüfung unterzogen werden, indem seine Polarisationseigenschaften auf Strahlung im THz-Spektralbereich untersucht werden. Mögliche Vorrichtungen zeigen die Fig. 13 und 14. Das Sicherheitsmerkmal 1 wirkt dabei als Polar isator, der THz-Strahlung mit TM-Polarisation durchlässt. Ist die THz-Strahlung entsprechend linear polarisiert, so tritt diese Komponente zum Großteil hindurch. Die Vorrichtung umfasst dazu eine THz-Quelle 15 sowie einen THz-Detektor 16. Um linear polarisierte Strahlung mit TM-Polarisation auf das Sicherheitselement 1 zu richten, ist in der in Fig. 13 dargestellten Ausführungsform der THz-Quelle 15 ein Polarisator 17 nachgeordnet; dieser kann entfallen, wenn die THz-Quelle 15 bereits die entsprechende polarisierte Strahlung abgibt. Nach Durchtritt durch das Sicherheitselement 1 ist ein Analysator vorgesehen, der die Polarisationsrichtung entsprechend für den THz-Detektor 16 filtert.

Stehen die Polarisationen der Strahlungsquelle und des Detektors senkrecht aufeinander, ergibt sich die in Fig. 14 gezeigte Vorrichtung. Damit kann der triviale Fall eines Loches ausgeschlossen werden, durch die die THz-Strahlung ebenfalls ungehindert passieren würde. Bei einer verdrehten Anordnung des Sicherheitselementes 1 wird eine senkrecht polarisierte THz-Strahlung beim Hindurchtreten gedreht und der Analysator mit waagerechter Polarisation lässt die THz-Strahlung passieren, so dass der THz-Detektor ein Signal empfängt. Durch die Aufnahme eines Signals aus zwei oder mehreren unterschiedlichen Polarisationsrichtungen kann der Kontrast verstärkt wer- den, d.h. die Vorrichtung ist zuerst in die Konfiguration der Fig. 13 und dann die der Fig. 14 eingestellt. Ferner kann das Sicherheitselement 1 Bereiche mit unterschiedlich orientierten Schlitz-Strukturen enthalten. Der ortsauflösende Detektor 16 misst in diesem Fall unterschiedliche Intensitäten für die einzelnen Bereiche. Dies erhöht die Zuverlässigkeit der Authentifizierung dieses Merkmals.

### Bezugszeichenliste

| | | | |
|---|---|---|---|
| 1 | Sicherheitselement | 17 | Polarisator |
| 2a | Trägerfolie | 18 | Analysator |
| 2b | obere Trägerfolie | 20 | erhabener Bereich |
| 3 | Deckschicht | 21 | Photoresist |
| 4 | opake Schicht | 22 | vertiefter Bereich |
| 5 | Längsschlitz | Θ | Einfallswinkel |
| 6 | Zwischenraum | E | einfallende THz-Strahlung |
| 7 | Feld | T | transmittierte THz-Strahlung |
| 8 | Dielektrikum | R | reflektierte THz-Strahlung |
| 9 | Aluminiumschicht | t | Schichtdicke |
| 10 | Dielektrikum | s | Schlitzbreite |
| 11 | Chromschicht | d | Periode |
| 12 | Mikrolinsen | | |
| 13 | Bearbeitungsstrahlung | | |
| 14 | Fokus | | |
| 15 | THz-Quelle | | |
| 16 | THz-Detektor | | |

## Patentansprüche

1. Sicherheitselement zur Herstellung von Wertdokumenten, wie Banknoten, Schecks oder dergleichen, das eine mit dem bloßen Auge nicht erkennbare Gitterstruktur aufweist, die durch eine für THz-Strahlung opake Schicht (4) gebildet ist, wobei
- die für THz-Strahlung opake Schicht (4) eine Schichtdicke zwischen 6 nm und 1 µm aufweist,
- in der für THz-Strahlung opaken Schicht (4) für THz-Strahlung transparente nebeneinanderliegende Längsschlitze (5) ausgebildet sind,
- die für THz-Strahlung opake Schicht (4) in ein für THz-Strahlung transparentes Dielektrikum (8) eingebettet ist,
- die Längsschlitze (5) nebeneinander periodisch oder quasiperiodisch mit einer Periode zwischen 8 µm und 200 µm, bevorzugt zwischen 10 µm und 100 µm angeordnet sind,
- die Breite der Längsschlitze (5) nicht größer als 1/ 5 der Periode, bevorzugt nicht größer als 1/10 der Periode ist, und
- die für THz-Strahlung opake Schicht (4) eine Metallschicht aufweist,
**dadurch gekennzeichnet, dass** die zwischen den Längsschlitzen (5) liegenden Bereiche (6) der für THz- Strahlung opaken Schicht (4) mit einem mit dem bloßen Auge wahrnehmbaren Sicherheitsmerkmal versehen sind.

2. Sicherheitselement nach Anspruch 1, **dadurch gekennzeichnet, dass** das mit dem bloßen Auge wahrnehmbare Sicherheitsmerkmal mindestens eine der folgenden Strukturen umfasst: Hologramm, Subwellenlängengitter mit Perioden von 200 nm bis 500 nm, Sägezahnstruktur und Color-Shift-Mehrschichtsystem.

3. Sicherheitselement nach einem der Ansprüche 1 oder 2, **dadurch gekennzeichnet, dass** die für THz-Strahlung opake Schicht (4) in mehrere Felder (7) unterteilt ist, die sich hinsichtlich einer Richtung, entlang der sich die Längsschlitze (5) erstrecken, hinsichtlich der Periode und/ oder hinsichtlich der Schlitzbreite unterscheiden.

4. Verfahren zur Herstellung eines Sicherheitselementes zur Herstellung von Wertdokumenten, wie Banknoten, Schecks oder dergleichen, wobei auf einem für THz-Strahlung transparenten Träger eine für THz-Strahlung opake Schicht (4) angeordnet und in dieser eine mit dem bloßen Auge nicht erkennbare Gitterstruktur ausgebildet wird, wobei
- die für THz-Strahlung opake Schicht (4) eine Schichtdicke zwischen 6 nm und 1 µm aufweist,
- in der für THz-Strahlung opaken Schicht (4) für THz-Strahlung transparente Längsschlitze ausgebildet werden,
- die Längsschlitze (5) periodisch oder quasiperiodisch mit einer Periode zwischen 8 µm und 200 µm angeordnet werden,
- die Breite der Längsschlitze (5) nicht größer als 1/5 der Periode ist,
- die für THz-Strahlung opake Schicht (4) mit einem für THz-Strahlung transparenten Dielektrikum (8) abgedeckt wird, und
- die für THz-Strahlung opake Schicht (4) eine Metallschicht aufweist,
**dadurch gekennzeichnet, dass** zwischen den Längsschlitzen (5) liegende Bereiche (6) der für THz-Strahlung opaken Schicht (4) mit einem mit dem bloßen Auge wahrnehmbaren Sicherheitsmerkmal versehen werden.

5. Verfahren nach Anspruch 4, **dadurch gekennzeichnet, dass** das mit dem bloßen Auge wahrnehmbare Sicherheitsmerkmal mindestens eine der folgenden Strukturen umfasst: Hologramm, Subwellenlängengitter mit Perioden von 200 nm bis 500 nm, Sägezahnstruktur und Color-Shift-Mehrschichtsystem.

6. Verfahren nach einem der Ansprüche 4 oder 5, **dadurch gekennzeichnet, dass** die Metallschicht aus mehreren Feldern besteht, die sich hinsichtlich einer Richtung, entlang der sich die Längsschlitze erstrecken, hinsichtlich der Periode und/oder hinsichtlich der Schlitzbreite unterscheiden.

7. Wertdokument mit einem Sicherheitselement nach einem der Ansprüche 1 bis 3.

## Claims

1. Security element for producing valuable documents, such as banknotes, cheques or the like, comprising a grating structure that is formed by a layer (4) that is opaque for THz radiation and is not detectable with the naked eye, wherein
- the layer (4) that is opaque for THz radiation has a layer thickness of between 6 nm and 1 µm,
- longitudinal slits (5) that are located next to one another and are transparent for THz radiation are formed in the layer (4) that is opaque for THz radiation,
- the layer (4) that is opaque for THz radiation is embedded into a dielectric (8) that is transparent for THz radiation,
- the longitudinal slits (5) are arranged periodically or quasi-periodically next to one another with a period of between 8 µm and 200 µm, preferably between 10 µm and 100 µm,
- the width of the longitudinal slits (5) is not greater than 1/5 or the period, preferably not greater than 1/10 of the period, and
- the layer (4) that is opaque for THz radiation comprises a metal layer, **characterized in that** the regions (6) of the layer (4) that is opaque for THz radiation which are located between the longitudinal slits (5) are provided with a security feature that is perceivable with the naked eye.

2. Security element according to Claim 1, **characterized in that** the security feature that is perceivable with the naked eye comprises at least one of the following structures: hologram, subwavelength grating with periods of 200 nm to 500 nm, sawtooth structure and colour-shift multilayer system.

3. Security element according to either of Claims 1 and 2, **characterized in that** the layer (4) that is opaque for THz radiation is divided into a plurality of fields (7) that differ from one another with respect to a direction along which the longitudinal slits (5) extend, with respect to the period and/or with respect to the slit width.

4. Method for producing a security element for producing valuable documents, such as banknotes, cheques or the like, wherein a layer (4) that is opaque for THz radiation is arranged on a carrier that is transparent for THz radiation and a grating structure that is not detectable with the naked eye is formed in said layer (4), wherein
- the layer (4) that is opaque for THz radiation has a layer thickness of between 6 nm and 1 µm,
- longitudinal slits that are transparent for THz radiation are formed in the layer (4) that is opaque for THz radiation,
- the longitudinal slits (5) are arranged periodically or quasi-periodically with a period of between 8 µm and 200 µm,
- the width of the longitudinal slits (5) is not greater than 1/5 of the period,
- the layer (4) that is opaque for THz radiation is covered with a dielectric (8) that is transparent for THz radiation, and
- the layer (4) that is opaque for THz radiation comprises a metal layer, **characterized in that** regions (6) of the layer (4) that is opaque for THz radiation which are located between the longitudinal slits (5) are provided with a security feature that is perceivable with the naked eye.

5. Method according to Claim 4, **characterized in that** the security feature that is perceivable with the naked eye comprises at least one of the following structures: hologram, subwavelength grating with periods of 200 nm to 500 nm, sawtooth structure and colour-shift multilayer system.

6. Method according to either of Claims 4 and 5, **characterized in that** the metal layer consists of a plurality of fields that differ from one another with respect to a direction along which the longitudinal slits extend, with respect to the period and/or with respect to the slit width.

7. Valuable document having a security element according to one of Claims 1 to 3.

## Revendications

1. Élément de sécurité destiné à la fabrication de documents de valeur, tels que des billets de banque, des chèques ou similaires, qui possède une structure en grille non reconnaissable à l'œil nu, laquelle est formée par une couche (4) opaque au rayonnement aux THz,
- la couche (4) opaque au rayonnement aux THz présentant une épaisseur de couche entre 6 nm et 1 µm,
- des fentes longitudinales (5) juxtaposées transparentes étant formées dans la couche (4) opaque au rayonnement aux THz,
- la couche (4) opaque au rayonnement aux THz étant enrobée dans un diélectrique (8) transparent au rayonnement aux THz,
- les fentes longitudinales (5) étant disposées les unes à côté des autres périodiquement ou quasi-périodiquement avec une période entre 8 µm et 200 µm, de préférence entre 10 µm et 100 µm,
- la largeur des fentes longitudinales (5) n'étant pas supérieure à 1/5 de la période, de préférence pas supérieure à 1/10 de la période et
- la couche (4) opaque au rayonnement aux THz possédant une couche métallique,
**caractérisé en ce que** les zones (6) de la couche (4) opaque au rayonnement aux THz qui se trouvent entre les fentes longitudinales (5) sont pourvues d'une caractéristique de sécurité perceptible à l'œil nu.

2. Élément de sécurité selon la revendication 1, **caractérisé en ce que** la caractéristique de sécurité perceptible à l'œil nu comporte au moins l'une des structures suivantes : hologramme, grille de sous-longueur d'onde avec des périodes de 200 nm à 500 nm, structure en dents de scie et système multi-couche à variation chromatique.

3. Élément de sécurité selon l'une des revendications 1 et 2, **caractérisé en ce que** la couche (4) opaque au rayonnement aux THz est subdivisée en plusieurs champs (7) qui se différencient du point de vue d'une direction le long de laquelle s'étendent les fentes longitudinales (5), du point de vue de la période et/ou du point de vue de la largeur de fente.

4. Procédé de fabrication d'un élément de sécurité destiné à la fabrication de documents de valeur, tels que des billets de banque, des chèques ou similaires, une couche (4) opaque au rayonnement aux THz étant disposée sur un élément porteur transparent au rayonnement aux THz et une structure en grille non reconnaissable à l'œil nu étant formée dans celle-ci,
- la couche (4) opaque au rayonnement aux THz présentant une épaisseur de couche entre 6 nm et 1 µm,
- des fentes longitudinales transparentes étant formées dans la couche (4) opaque au rayonnement aux THz,
- les fentes longitudinales (5) étant disposées périodiquement ou quasi-périodiquement avec une période entre 8 µm et 200 µm,
- la largeur des fentes longitudinales (5) n'étant pas supérieure à 1/5 de la période,
- la couche (4) opaque au rayonnement aux THz étant recouverte d'un diélectrique (8) transparent au rayonnement aux THz,
- la couche (4) opaque au rayonnement aux THz possédant une couche métallique,
**caractérisé en ce que** les zones (6) de la couche (4) opaque au rayonnement aux THz qui se trouvent entre les fentes longitudinales (5) sont pourvues d'une caractéristique de sécurité perceptible à l'œil nu.

5. Procédé selon la revendication 4, **caractérisé en ce que** la caractéristique de sécurité perceptible à l'œil nu comporte au moins l'une des structures suivantes : hologramme, grille de sous-longueur d'onde avec des périodes de 200 nm à 500 nm, structure en dents de scie et système multicouche à variation chromatique.

6. Procédé selon l'une des revendications 4 ou 5, **caractérisé en ce que** la couche métallique se compose de plusieurs champs qui se différencient du point de vue d'une direction le long de laquelle s'étendent les fentes longitudinales, du point de vue de la période et/ou du point de vue de la largeur de fente.

7. Document de valeur comprenant un élément de sécurité selon l'une des revendications 1 à 3.
